# EUROPÄISCHE PATENTSCHRIFT

(11) **EP 0 788 957 B1**
(45) Veröffentlichungstag und Bekanntmachung des Hinweises auf die Patenterteilung: **02.07.2003**
(21) Anmeldenummer: 97101885.8
(22) Anmeldetag: 06.02.1997
(51) Int. Cl.: B60T 17/22, B60T 7/12, B60T 13/74

(54) **Verfahren zur kontrollierten Inbetriebnahme eines Fahrzeugs**
Method for a controlled setting into operation of a vehicle
Procédé d'une mise en oeuvre controllée d'un véhicule

(30) Priorität: 10.02.1996 DE 19604946
(43) Veröffentlichungstag der Anmeldung: 13.08.1997
(73) Patentinhaber: Continental Teves AG & Co. oHG, 60441 Frankfurt am Main (DE)
(72) Erfinder: Prinzler, Hubertus, 30853 Langenhagen (DE); Maron, Christof, 30989 Gehrden (DE); Dieckmann, Thomas, Dr., 30982 Pattensen (DE)

(56) Entgegenhaltungen:
- EP-A- 0 181 763
- EP-A- 0 212 074
- DE-A- 4 218 717
- DE-C- 4 338 064
- US-A- 3 907 071
- US-A- 4 629 043
- US-A- 4 708 406

## Beschreibung

Die Erfindung betrifft ein Verfahren zur Inbetriebnahme eines Kraftfahrzeuges mit einem Bremssystem, das bei einem Bremsvorgang des Kraftfahrzeuges seine Bremsbetätigungsenergie zumindest teilweise aus Bremsenergiespeichern bezieht, deren Ladezustand bei der Inbetriebnahme überprüft wird. Die Erfindung betrifft ferner ein Kraftfahrzeug mit einem Bremssystem, das bei einem Bremsvorgang seine Bremsbetätigungsenergie zumindest teilweise aus Bremsenergiespeichern bezieht und mit einer Prüfeinrichtung zur Überprüfung des Ladezustandes der Bremsenergiespeicher.

In jüngster Vergangenheit sind für Kraftfahrzeuge, insbesondere für Personenkraftwagen, Bremsanlagen vom Brake by Wire-Typ entwickelt worden. Bei derartigen Bremsanlagen wird der Bremswunsch des Fahrers durch Ausüben einer Fußkraft auf ein Bremspedal kundgetan und die Einwirkung der Fußkraft auf das Pedal wird von einem Sensor erfaßt und in ein elektrisches Signal umgewandelt. Das Signal wird an sogenannte Bremsaktuatoren weitergeleitet, von denen jeweils einer einem Rad des Kraftfahrzeuges zugeordnet ist und jeder Bremsaktuator übt u.a. mit Hilfe eines Elektromotors eine Bremskraft auf das Rad des Kraftfahrzeuges aus. Die für einen Bremsvorgang erforderliche Bremsbetätigungsenergie wird also nicht, wie bei herkömmlichen Bremssystemen, in mechanischer, sondern in elektrischer Form bereitgestellt. Dementsprechend müssen elektrische Bremsenergiespeicher bereitgestellt werden, um die Bremsanlage bei einem Bremsvorgang mit der notwendigen elektrischen Energie versorgen zu können. Hierbei kann ein Teil der Energieversorgung aus dem normalen Bordnetz des Kraftfahrzeuges und ein weiterer Teil der Energieversorgung, der das normale Bordnetz überlasten würde, aus separaten Bremsenergiespeichern zur Verfügung gestellt werden. Alternativ ist es auch möglich, die für die Bremsanlage erforderliche elektrische Energie ausschließlich aus einem separaten Bremsenergiespeichern zu beziehen. Wie auch immer, ein ausreichender Ladezustand der separaten Bremsenergiespeicher ist besonders wichtig für die Sicherheit der Bremsanlage. Aus diesem Grunde ist der Ladezustand der Bremsenergiespeicher ständig und insbesondere bei der Inbetriebnahme des Kraftfahrzeuges zu überprüfen.

In diesem Zusammenhang ist aus der gattungsgemäßen DE 35 02 100 A1 eine Bremsanlage mit elektrisch ansteuerbaren Bremsgeräten bekannt, die neben einem ersten Energiespeicher für den Normalbetrieb über einen zweiten Energiespeicher für den Notbetrieb verfügt. Den beiden Bremsenergiespeichern ist eine Spannungsüberwachungseinrichtung zugeordnet, die ständig den Ladezustand der Bremsenergiespeicher überprüft. Wird an dem ersten Energiespeicher für den Normalbetrieb ein zu geringer Ladezustand festgestellt, so wird mit Hilfe einer Umschalteeinrichtung auf den zweiten Energiespeicher für den Notbetrieb umgeschaltet und der erste Energiespeicher wird mit Hilfe eines Generators aufgeladen. Die Umschaltung auf den Notbetrieb wird dem Fahrer des Kraftfahrzeuges mit Hilfe eines Signalgebers optisch oder akustisch angezeigt.

Auch bei der Inbetriebnahme des Kraftfahrzeuges wird der Ladezustand des ersten Energiespeichers überprüft. Bei einem zu niedrigen Ladezustand erfolgt eine Anzeige über den erwähnten Signalgeber und es wird zur Energieversorgung der Bremsanlage auf den zweiten Energiespeicher umgeschaltet. Weist auch der zweite Energiespeicher einen zu niedrigen Ladezustand auf, so wird dies dem Fahrer des Kraftfahrzeuges durch den Signalgeber ebenfalls angezeigt.

Bei der aus der DE 35 02 100 A1 bekannten Bremsanlage entsteht durch die Überprüfung des Ladezustands des Bremsenergiespeichers der Bremsanlage und durch die Bereitstellung eines zweiten Energiespeichers eine zusätzliche Sicherheit. Bei dem aus der Druckschrift bekannten Verfahren zur Inbetriebnahme eines Kraftfahrzeuges handelt es sich jedoch um ein passives Verfahren, da der Ladezustand des Energiespeichers für den Normalbetrieb bzw. der Ladezustand des Energiespeichers für den Notbetrieb dem Fahrer lediglich optisch oder akustisch angezeigt wird. Die Sicherheit des Kraftfahrzeuges wird durch ein derartiges Verfahren zur Inbetriebnahme aktiv nicht erhöht.

Der Erfindung liegt die Aufgabe zugrunde, ein Verfahren zur Inbetriebnahme eines einen Antriebsmotor aufweisenden Kraftfahrzeuges mit einem Bremssystem der eingangs genannten Art zu schaffen, durch das die Sicherheit des Kraftfahrzeuges aktiv erhöht wird. Es ist ferner Aufgabe der Erfindung, ein Kraftfahrzeug mit einem Bremssystem der eingangs genannten Art zu schaffen, mit dem sich das Verfahren durchführen läßt.

Gemäß den kennzeichnenden Merkmalen des Verfahrensanspruchs 1 wird die Aufgabe durch folgende Verfahrensschritte gelöst:
- das Kraftfahrzeug wird vor der Überprüfung des Ladezustands der Bremsenergiespeicher automatisch in einen fahruntüchtigen Zustand überführt,
- die Überprüfung des Ladezustandes der Bremsenergiespeicher erfolgt und
- das Kraftfahrzeug wird in einen fahrtüchtigen Zustand überführt, wenn die Überprüfung ergibt, daß der gemessene Ladezustand mindestens eines der Bremsenergiespeicher größer oder gleich einem vorgegebenen Mindestladezustand ist.

Gemäß den kennzeichnenden Merkmalen des nebengeordneten Sachanspruchs 6 wird die Aufgabe durch ein Kraftfahrzeug gelöst, das über die folgenden Bestandteile verfügt:
- eine Vorrichtung, mit der das Kraftfahrzeug automatisch in einen fahruntüchtigen Zustand überführbar ist
- eine Steuereinrichtung, in der ein von der Prüfeinrichtung gemessener Ladezustand der Bremsenergiespeicher mit einer gespeicherten Information über einen vorgegebenen Mindestladezustand vergleichbar ist und durch die eine Überführung des Kraftfahrzeuges in einen fahrtüchtigen Zustand veranlaßbar ist, wenn der gemessene Ladezustand mindestens eines der Bremsenergiespeicher größer oder gleich dem vorgegebenen Mindestladezustand ist.

In den beiden vorgenannten Absätzen und im folgenden ist unter einem "fahruntüchtigen" Zustand ein Zustand zu verstehen, in dem das Kraftfahrzeug technisch in Ordnung ist, in dem aber eine zum Fahren des Kraftfahrzeuges notwendige Komponente gezielt außer Funktion gesetzt ist (z.B. das Getriebe) oder in dem das Kraftfahrzeug gezielt in seiner Fahrbereitschaft blockiert ist (z.B. durch Feststellen der Feststellbremse).

Der Grundgedanke der Erfindung ist darin zu sehen, daß der fahruntüchtige Zustand des Kraftfahrzeuges vor der Überprüfungdes Ladezustands hergestellt wird. Dadurch wird die aktive Sicherheit des Kraftfahrzeuges bei der Inbetriebnahme deutlich erhöht, da die "Konsequenz" einer positiven Überprüfung des Ladezustands eine Überführung des Kraftfahrzeuges in den fahrtüchtigen Zustand ist. Sollte diese "Konsequenz" aus irgendeinem Grunde unterdrückt werden, so verbleibt das Kraftfahrzeug in dem fahruntüchtigen und damit sicheren Zustand. Der Gewinn an aktiver Sicherheit durch das erfindungsgemäße Verfahren wird besonders deutlich, wenn man das erfindungsgemäße Verfahren mit einem Verfahren vergleicht, bei dem das Kraftfahrzeug als "Konsequenz" einer negativen Überprüfung des Ladezustandes von einem fahrtüchtigen in einen fahruntüchtigen Zustand überführt wird. Wird nämlich diese "Konsequenz" aus irgendeinem Grunde unterdrückt, so verbleibt das Kraftfahrzeug trotz einer negativ verlaufenden Prüfung in einem fahrtüchtigen Zustand und kann infolgedessen trotz nicht oder nur begrenzt einsatzbereiter Bremsen in Betrieb genommen und bewegt werden.

Der wesentliche Vorteil des erfindungsgemäßen Verfahrens zur Inbetriebnahme des Kraftfahrzeuges ist darin zu sehen, daß es automatisch abläuft und vom Fahrer nicht beeinflußt werden kann. Insbesondere kann das Verfahren nicht vom Fahrer "übersteuert" werden und der Fahrer kann das Kraftfahrzeug nicht in einen fahrtüchtigen Zustand überführen, obwohl die Bremsen des Kraftfahrzeuges nicht oder nur begrenzt einsatzfähig sind. Vorzugsweise findet die Überführung des Kraftfahrzeuges in den fahruntüchtigen Zustand bei der letzten Stillegung des Kraftfahrzeuges automatisch statt.

Gemäß einer Weiterbildung des Verfahrens nach Anspruch 2 erfolgt eine Nachladung der Bremsenergiespeicher, wenn bei der Überprüfung ein zu niedriger Ladezustand festgestellt wird und das Kraftfahrzeug wird in einen fahrtüchtigen Zustand überführt, wenn eine erneute Überprüfung des Ladezustandes ergibt, daß durch Nachladen mindestens einer der Bremsenergiespeicher den vorgegebenen Mindestladezustand erreicht hat. Diese Nachladung der Bremsenergiespeicher kann durch eine externe Energiequelle oder aber intern durch einen Generator des Kraftfahrzeuges erfolgen.

Im letzteren Falle muß das Verfahren zur Inbetriebnahme des Kraftfahrzeuges bei laufendem Motor durchgeführt werden. Ein Nachladen der Bremsenergiespeicher durch einen internen Generator des Kraftfahrzeuges hat den Vorteil, daß bei einem zu niedrigen Ladezustand der Bremsenergiespeicher keine Werkstatt für den Nachladevorgang in Anspruch genommen werden muß.

Gemäß einer ersten Weiterbildung des Verfahrens nach Anspruch 3 erfolgt die Überführung des Kraftfahrzeuges in den fahruntüchtigen Zustand durch Überführung einer Wegfahrsperre in einen stromlosen Zustand und die Überführung des Kraftfahrzeuges in den fahrtüchtigen Zustand durch Überführung der Wegfahrsperre in einen stromführenden Zustand. Die Überführung des Kraftfahrzeuges in den fahruntüchtigen Zustand erfolgt automatisch vor der Überprüfung des Ladezustandes des Bremsenergiespeichers und vorzugsweise bei der letzten Stillegung des Kraftfahrzeuges.

Gemäß einem ersten Ausführungsbeispiel nach Anspruch 4 handelt es sich bei der Wegfahrsperre um eine elektrische Feststellbremse, die bei der letzten Stillegung des Kraftfahrzeuges automatisch in stromlosen Zustand übergeht und dadurch das Kraftfahrzeug festhält. Hierdurch wird der Vorteil erreicht, daß zur Erzeugung des fahruntüchtigen Zustandes des Kraftfahrzeuges ein ohnehin vorhandener Bestandteil des Kraftfahrzeuges genutzt wird. Darüber hinaus wird das Kraftfahrzeug am Wegrollen gehindert.

Gemäß einem weiteren Ausführungsbeispiel nach Anspruch 5 handelt es sich bei der Wegfahrsperre um eine Getriebesperre, die bei Stillegung des Kraftfahrzeuges automatisch in den stromlosen Zustand übergeht. Derartige Getriebesperren sind aus dem Stand der Technik bereits bekannt und sollen daher hier nur kurz erläutert werden. Geht man bei Automatikbetrieben beispielsweise in die Stellung "P" für Parken, wird eine mechanische Klinkensperre eingerastet, die das Getriebe blockiert. Diese derzeit mechanisch betätigte Getriebesperre kann so ausgebildet werden, daß sie elektrisch betätigt wird, wobei der stromlose Zustand zum gesperrten Zustand des Getriebes führt. Auch hier ergibt sich der Vorteil, daß man eine ohnehin vorhandene Wegfahrsperre nutzt.

Ein Ausführungsbeispiel und weitere Vorteile der Erfindung werden im Zusammenhang mit den nachstehenden Figuren erläutert, darin zeigt
- Fig. 1: ein Kraftfahrzeug mit einer Bremsanlage in schematischer Darstellung
- Fig. 2: ein Flußdiagramm
- Fig. 3: eine Wegfahrsperre in Form einer elektrischen Feststellbremse

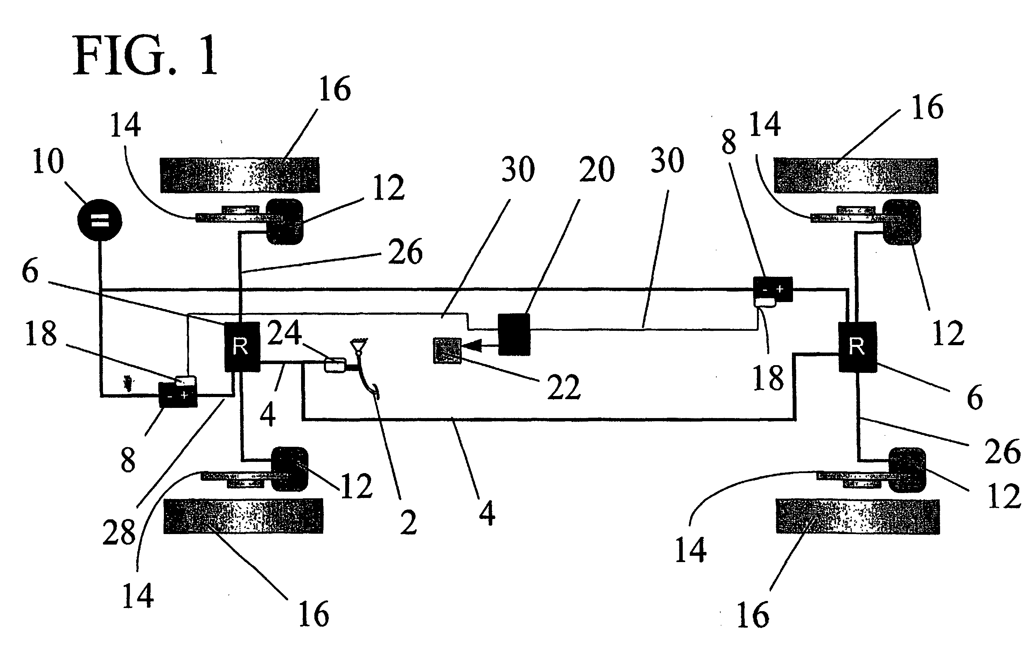

Fig. 1 zeigt ein Kraftfahrzeug mit einer Bremsanlage, bei der die für einen Bremsvorgang notwendige Energie in Form von elektrischer Energie aus elektrischen Bremsenergiespeichern bereitgestellt wird, in schematischer Darstellung. Der Fahrer des Kraftfahrzeuges tut seinen Bremswunsch kund, indem er auf das Bremspedal 2 eine Fußkraft ausübt.

Der infolge der Fußkraft zurückgelegte Pedalweg des Bremspedals 2 wird mit Hilfe eines Sensors 24 in ein dem Bremswunsch entsprechendes elektrisches Signal umgewandelt.Das Signal wird über die Leitungen 4 an die Regeleinheiten 6 weitergegeben, die es wiederum über Leitungen 26 als Steuersignale zu den Bremsaktuatoren 12 leiten.

Die Bremsaktuatoren 12 üben schließlich mit Hilfe einer elektrisch angetriebenen Zuspannvorrichtung eine Zuspannkraft auf die Bremsscheiben 14 aus, was letztendlich eine Bremswirkung an den Rädern 16 des Kraftfahrzeuges hervorruft. Die für einen Bremsvorgang notwendige elektrische Energie erhalten die Bremsaktuatoren 12 insgesamt oder zumindest teilweise aus den Bremsenergiespeichern (Bremsbatterien) 8, von denen einer den Bremsaktuatoren 12 der Vorderachse und einer den Bremsaktuatoren 12 der Hinterachse zugeordnet ist. Dazu sind die Bremsenergiespeicher 8 über elektrische Leitungen 28 mit den Regeleinheiten 6 und damit über die Leitungen 26 letzendlich mit den Bremsaktuatoren 12 verbunden. Für den Fall, daß die Bremsenergiespeicher 8 lediglich einen Teil der Bremsenergie zur Verfügung stellen, wird der restliche Teil der Bremsenergie direkt aus dem Bordnetz 10 zur Verfügung gestellt, daß genauso wie die Bremsenergiespeicher 8 mit den Bremsaktuatoren 12 verbunden ist.

Unabhängig davon, ob die Bremsenergie für einen Bremsvorgang insgesamt oder z.T. aus dem Bremsenergiespeichern 8 zur Verfügung gestellt wird, hat es sich gezeigt, daß eine sichere Abbremsung des Kraftfahrzeuges nur unter Einbeziehung der Bremsenergiespeicher 8 möglich ist und zumindest einer der Bremsenergiespeicher 8 deshalb immer einen ausreichenden Mindestladezustand aufweisen muß. Insbesondere bei Fahrtantritt müssen die Bremsenergiespeicher 8 also auf einen ausreichenden Ladezustand überprüft werden, da es beispielsweise durch einen langen Stillstand des Kraftfahrzeuges etc. zu einer teilweisen Entladung der Bremsenergiespeicher 8 kommen kann. Zur Überprüfung des Ladezustandes sind die Bremsenergiespeicher 8 mit Ladezustandssensoren 18 verbunden. Die Ladezustandssensoren 18 übermitteln das Ergebnis der Überprüfung über Leitungen 30 an die Steuereinrichtung 20. In der Steuereinrichtung 20 wird bewertet, ob der Ladezustand mindestens eines der Bremsenergiespeicher 8 für einen sicheren Betrieb des Kraftfahrzeuges eine ausreichende Größe aufweist. Im Falle einer positiven Bewertung wird die vor der Überprüfung des Ladezustandes durch ein Signal der Steuereinrichtung 20 aktivierte Wegfahrsperre 22, die das Kraftfahrzeug in einen fahruntüchtigen Zustand versetzt, infolge eines weiteren Signals der Steuereinrichtung 20 "entriegelt", so daß sich das Kraftfahrzeug nunmehr in einem fahrtüchtigen Zustand befindet. Fällt andernfalls die Bewertung durch die Steuereinrichtung 20 negativ aus, so wird von der Steuereinrichtung 20 kein Signal an die Wegfahrsperre 22 abgegeben und das Fahrzeug bleibt somit in seinem fahruntüchtigen Zustand.

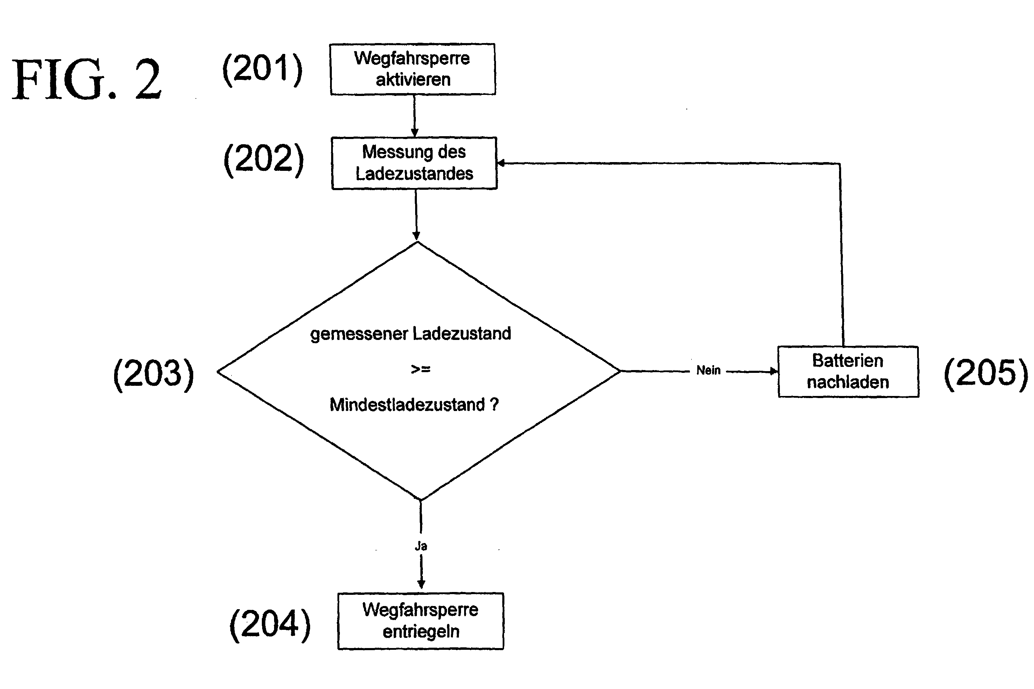

Fig. 2 zeigt zur Erläuterung des erfindungsgemäßen Verfahrens ein Flußdiagramm. In einem ersten Verfahrensschritt 201 wird das Kraftfahrzeug automatisch in einen fahruntüchtigen Zustand versetzt. Dies kann beispielsweise durch das Aktivieren einer Wegfahrsperre geschehen. Vorzugsweise wird die Aktivierung der Wegfahrsperre bei der letzten Stillegung des Kraftfahrzeuges automatisch vorgenommen.

Nachdem sichergestellt ist, daß sich das Kraftfahrzeug bei der Inbetriebnahme in einem fahruntüchtigen Zustand befindet, findet in dem Verfahrensschritt 202 mit Hilfe der Ladezustandssensoren 18 eine Messung des Ladezustandes der Bremsenergiespeicher 8 statt (siehe Fig. 1).

Das Ergebnis der Messung wird an die Steuereinrichtung 20 (siehe Fig. 1) weitergegeben und in der Steuereinrichtung 20 wird, z.B. mit Hilfe eines Komparators, beurteilt, ob der gemessene Ladezustand größer oder gleich einer in der Steuereinrichtung 20 gespeicherten Information über einen vorgegebenen Mindestladezustand ist (siehe Verfahrensschritt 203). Nur bei einer positiven Überprüfung, d.h. wenn der gemessene Ladezustand mindestens eines der Bremsenergiespeicher 8 tatsächlich größer oder gleich dem vorgegebenen Mindestladezustand ist, kann das Kraftfahrzeug in den fahrtüchtigen Zustand überführt werden. In diesem Fall wird von der Steuereinrichtung 20 ein Signal an die Wegfahrsperre übermittelt, woraufhin die Wegfahrsperre "entriegelt" wird (siehe Verfahrensschritt 204). Das Verfahren zur Inbetriebnahme des Fahrzeuges kann noch sicherer gemacht werden, wenn das Fahrzeug erst in den fahrtüchtigen Zustand überführt wird, wenn die Überprüfung des Ladezustands der Bremsenergiespeicher 8 ergibt, daß alle Bremsenergiespeicher 8 den vorgegebenen Mindestladezustand erreicht haben.

Erfolgt hingegen durch die Steuereinrichtung 20 eine negative Überprüfung des Ladezustandes, ist also der gemessene Ladezustand beider Bremsenergiespeicher 8 kleiner als der vorgegebene Mindestladezustand, so können die Bremsenergiespeicher 8 nachgeladen werden (siehe Verfahrenschritt 205). Der Nachladevorgang kann entweder durch einen fahrzeugeigenen Generator oder aber durch eine externe Nachladevorrichtung durchgeführt werden. Während des Nachladevorgangs wird, wie es der Verfahrensschritt 202 zeigt, wiederum der Ladezustand der Bremsenergiespeicher 8 gemessen. Das Ergebnis der Messung wird wiederum an die Steuereinrichtung 20 übermittelt, wo der gemessene Ladezustand wie oben erläutert wiederum mit dem vorgegebenen Mindestladezustand verglichen wird. Die aus den Verfahrensschritten 202, 203 und 205 bestehende Schleife wird solange wiederholt, bis die Überprüfung des gemessenen Ladezustandes in der Steuereinrichtung 20 positiv ausfällt. Erst danach wird das entsprechende Signal an die Wegfahrsperre 22 weitergegeben, woraufhin diese entriegelt wird.

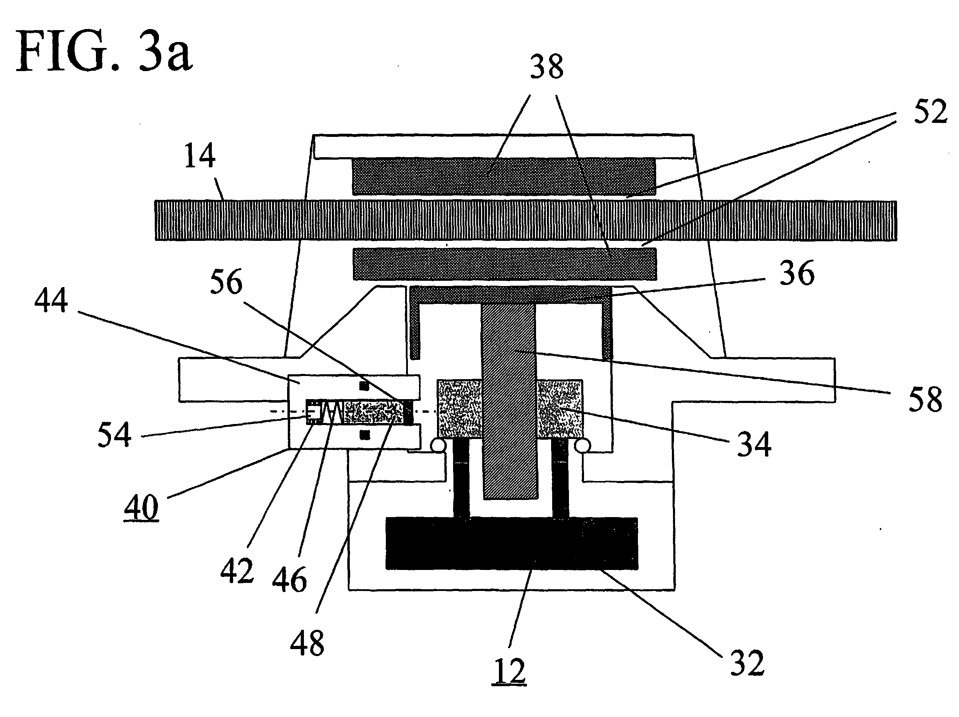

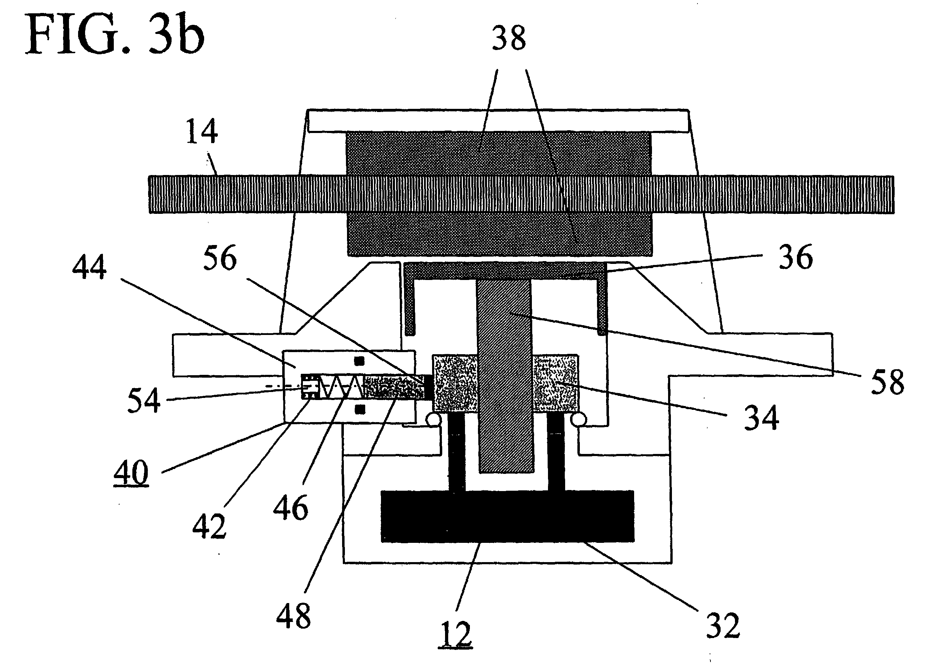

Im Zusammenhang mit der Fig. 3 wird im folgenden eine Wegfahrsperre 22 in Form einer elektrischen Festellbremse erläutert, die in ihrem stromlosen Zustand aktiviert und in ihrem stromführenden Zustand "entriegelt" ist. In der Fig. 3 sind in schematischer Darstellung nur die für die folgenden Erläuterungen notwendigen Bestandteile gezeigt. Die elektrische Feststellbremse ist in den Bremsaktuator 12 integriert, der einen Elektromotor 32 enthält, mit Hilfe dessen die Spindelmutter 34 in eine Drehbewegung um eine Achse versetzt werden kann, die durch die Spindelstange 58 vorgegeben ist.

Die Bewegung der Spindelmutter 34 bewirkt eine axiale Bewegung der Spindelstange 58 und eine axiale Bewegung des Bremskolbens 36. Dadurch werden bei einem Bremsvorgang die mit dem Kolben 36 in Wirkverbindung stehenden Bremsbeläge 38 ebenfalls in eine Bewegung in Richtung der Bremsbeläge 38 versetzt, so daß die Bremsbeläge 38 schließlich nach Durchlaufen des Luftspaltes 52 an der Bremsscheibe 14 anliegen und eine Bremskraft hervorrufen. Nach einem Bremsvorgang werden die Bremsbeläge 38, der Bremskolben 36 und die Spindelstange 58 durch Rückstellkräfte in ihre Ausgangslage zurückbewegt.

Der Bremsaktuator 12 enthält neben den bisher erläuterten Bestandteilen eine elektrische Feststellbremse 40, mit Hilfe der der Bremsaktuator 12 und damit die Bremsscheibe 14 festgestellt werden kann. Die elektrische Feststellbremse 40 kann beispielsweise als elektromagnetische Reibungsrutschkupplung ausgebildet sein. In diesem Fall befindet sich in dem Gehäuse 44 der elektrischen Feststellbremse 40 ein Elektromagnet, angedeutet durch die leitende Spule 42, die um einen Metallkern 54 gewickelt ist. Die elektrische Feststellbremse 40 enthält darüber hinaus einen Metallstift 48 mit einem Reibkopf 56, der in axialer Richtung beweglich in dem Gehäuse 44 gelagert ist. Zwischen dem Metallkern 54 und dem Metallstift 48 befindet sich eine Andruckfeder 46.

Fig. 3a zeigt einen Bremsaktuator 12 mit "gelöster" Feststellbremse, die Wegfahrsperre 22 befindet sich also in ihrem "entriegelten" Zustand. Der "gelöste" Zustand der elektrischen Feststellbremse 40 wird durch Anlegen einer elektrischen Spannung an die leitende Spule 42 erreicht, infolgedessen ein Strom durch die leitende Spule 42 getrieben wird. Das Anlegen der elektrischen Spannung an die Bremsaktuatoren 12 (s. Fig. 1) wird bei der Inbetriebnahme des Fahrzeugs von der Steuereinrichtung 20 (siehe Fig. 1) veranlaßt, wenn mindestens einer der Bremsenergiespeicher 8 einen ausreichenden Ladezustand aufweist.

Der Elektromagnet entfaltet dann seine Wirkung und der Metallstift 48 wird von dem Elektromagneten in das Gehäuse 44 gezogen. Hierbei wird die Federkraft der Andruckfeder 46 überwunden. In dem "gelösten" Zustand behindert die elektrische Feststellbremse 40 nicht die Bewegung der Spindelmutter 20.

Fig. 3b zeigt einen Bremsaktuator 12 in einem festgestellten Zustand, also eine Wegfahrsperre 22 in ihrem aktiven Zustand. Vorzugsweise wird dieser aktive Zustand der Wegfahrsperre bei der letzten Stillegung des Kraftfahrzeuges automatisch herbeigeführt und wie folgt erreicht.

Zunächst wird der Bremsaktuator 12 bei "gelöster" elektrischer Feststellbremse (siehe Fig. 2a) betätigt, bis die Bremsbeläge 38 an der Bremsscheibe 14 anliegen. Diese Betätigung des Bremsaktuators 12 kann bei der letzten Stillegung des Fahrzeuges beispielsweise von der Steuereinrichtung 20 (siehe Fig. 1) veranlaßt werden. Unter Beibehaltung dieses Zustands wird die elektrische Feststellbremse 40 von dem ersten stromführenden Zustand (siehe Fig. 2a) in den zweiten stromlosen "angezogenen" Zustand überführt. Auch dies kann beispielsweise von der Steuereinrichtung 20 bei der letzten Stillegung des Fahrzeuges veranlaßt werden, nachdem sichergestellt ist, daß die Bremsbeläge 38 an der Bremsscheibe 14 anliegen. Die Wirkung des Elektromagneten ist dann aufgehoben und der Metallstift 48 mit dem Reibkopf 56 wird durch die Andruckfeder 46 gegen die Spindelmutter 34 gepresst. Durch den Anpressdruck des Metallstifts 48 an die Spindelmutter 34 entsteht eine Reibungskraft, die höher als die Rückstellkraft der Bremsbelege 38 bzw. der Spindelstange 58.

Dies führt dazu, daß die Bremsbeläge 38 auch bei nichtangetriebenem Elektromotor 32 in ihrer Position fixiert werden und somit die Bremsscheiben 14 feststellen.

### Bezugszeichenliste

- 2: Bremspedal
- 4: Leitungen
- 6: Regeleinheit für Bremsaktuatoren
- 8: Bremsbatterie
- 10: Bordnetz
- 12: Bremsaktuatoren
- 14: Bremsscheibe
- 16: Rad
- 18: Ladezustandsensor
- 20: Steuereinrichtung
- 22: Wegfahrsperre
- 24: Sensor
- 26: Leitungen
- 28: Leitungen
- 30: Leitungen
- 32: Elektromotor
- 34: Spindelmutter
- 36: Bremskolben
- 38: Bremsbelag
- 40: elektrische Feststellbremse in Form einer elektrischen Reibungsmetallkupplung
- 42: Spule
- 44: Gehäuse der Reibungsrutschkupplung
- 46: Andruckfeder
- 48: Metallstift mit Reibkopf
- 52: Luftspalt
- 54: Metallkern
- 56: Reibkopf
- 58: Spindelstange

## Patentansprüche

1. Verfahren zur Inbetriebnahme eines einen Antriebsmotor aufweisenden Kraftfahrzeuges mit einem Bremssystem, das bei einem Bremsvorgang des Kraftfahrzeuges seine Bremsbetätigungsenergie zumindest teilweise aus Bremsenergiespeichern (8) bezieht, deren Ladezustand bei der Inbetriebnahme überprüft wird, **dadurch gekennzeichnet, dass**
- das Kraftfahrzeug vor der Überprüfung des Ladezustandes automatisch in einen fahruntüchtigen Zustand überführt wird,
- die Überprüfung des Ladezustands erfolgt und
- das Kraftfahrzeug in einen fahrtüchtigen Zustand überführt wird, wenn die Überprüfung ergibt, dass der Ladezustand mindestens eines der Bremsenergiespeicher (8) größer oder gleich einem vorgegebenen Mindestladezustand ist.

2. Verfahren zur Inbetriebnahme eines Kraftfahrzeuges nach Anspruch 1, **dadurch gekennzeichnet, daß** einem Nachladung der Bremsenergiespeicher (8) erfolgt, wenn bei der Überprüfung ein zu niedriger Ladezustand festgestellt und daß das Kraftfahrzeug in den fahrtüchtigen Zustand überführt wird, wenn eine erneute Überprüfung des Ladezustands ergibt, daß durch Nachladen mindestens einer der Bremsenergiespeicher (8) den vorgegebenen Mindestladezustand zumindest erreicht hat.

3. Verfahren zur Inbetriebnahme eines Kraftfahrzeuges nach einem der Ansprüche 1 bis 2, **dadurch gekennzeichnet, daß** die Überführung des Kraftfahrzeuges in den fahruntüchtigen Zustand durch Überführung einer Wegfahrsperre (22) in einen stromlosen Zustand und die Überführung des Kraftfahrzeuges in den fahrtüchtigen Zustand durch Überführung der Wegfahrsperre (22) in einen stromführenden Zustand vorgenommen wird.

4. Verfahren zur Inbetriebnahme eines Kraftfahrzeuges nach Anspruch 3, **dadurch gekennzeichnet, daß** es sich bei der Wegfahrsperre (22) um eine elektrische Feststellbremse (40) handelt, die bei der Stillegung des Kraftfahrzeuges automatisch in den stromlosen Zustand übergeht und dadurch das Kraftfahrzeug festhält.

5. Verfahren zur Inbetriebnahme eines Kraftfahrzeuges nach Anspruch 3, **dadurch gekennzeichnet, daß** es sich bei der Wegfahrsperre (22) um eine Getriebesperre handelt, die bei Stillegung des Kraftfahrzeuges automatisch in den stromlosen Zustand übergeht.

6. Kraftfahrzeug mit einem Bremssystem, das bei einem Bremsvorgang seine Bremsenergie zumindest teilweise aus Bremsenergiespeichern (8) bezieht und mit einer Prüfeinrichtung (18), mit der der Ladezustand der Bremsenergiespeicher (8) überprüfbar ist, **dadurch gekennzeichnet, daß** das Kraftfahrzeug ferner über folgende Bestandteile verfügt:
- eine Vorrichtung (22), mit der das Kraftfahrzeug automatisch in einen fahruntüchtigen Zustand überführbar ist,
- eine Steuereinrichtung (20), in der ein von der Prüfeinrichtung (18) gemessener Ladezustand der Bremsenergiespeicher (8) mit einer gespeicherten Information über einen vorgegebenen Mindestladezustand vergleichbar ist und durch die eine Überführung des Kraftfahrzeuges in einen fahrtüchtigen Zustand veranlaßbar ist, wenn der gemessene Ladezustand mindestens eines der Bremsenergiespeicher (8) größer oder gleich dem vorgegebenen Mindestladezustand ist.

7. Kraftfahrzeug nach Anspruch 6, **dadurch gekennzeichnet, daß** die Vorrichtung (22), mit der das Kraftfahrzeug automatisch in den fahruntüchtigen Zustand überführbar ist, eine Wegfahrsperre (22) ist, die bei Stillegung des Kraftfahrzeuges automatisch von einem stromführenden in einen stromlosen Zustand überführt wird und dadurch das Kraftfahrzeug festhält.

8. Kraftfahrzeug nach Anspruch 7, **dadurch gekennzeichnet, daß** es sich bei der Wegfahrsperre (22) um eine elektrische Feststellbremse (40) oder um eine Getriebesperre handelt.

## Claims

1. Method for starting up a motor vehicle with a drive motor and a brake system obtaining its brake actuation energy at least in part from brake energy storages (8) when the motor vehicle is braked, the state of charge of the brake energy storages being checked during the start-up,
**characterized in that**
- the motor vehicle is automatically transferred into a driveable state before the state of charge is checked,
- the state of charge is checked and
- the motor vehicle is transferred into a driveable state if the check-up brings about that the state of charge of at least one of the brake energy storages (8) exceeds or is equal to a preset minimum state of charge.

2. Method for starting up a motor vehicle according to claim 1,
**characterized in that** the brake energy storages (8) are recharged if the check-up brings about that the state of charge is too low, and **in that** the motor vehicle is transferred into a driveable state if another check-up of the state of charge brings about that at least one of the brake energy storages (8) has at least reached the preset minimum state of charge as a result of recharging.

3. Method for starting up a motor vehicle according to any one of the claims 1 to 2,
**characterized in that** the motor vehicle is transferred into a non-driveable state by transferring an immobiliser (22) into a currentless state, and **in that** the motor vehicle is transferred into a driveable state by transferring the immobiliser (22) into a current-conductive state.

4. Method for starting up a motor vehicle according to claim 3,
**characterized in that** the immobiliser (22) is an electric parking brake (40) which is automatically transferred into the currentless state when the motor vehicle is turned off, thus blocking the motor vehicle.

5. Method for starting up a motor vehicle according to claim 3,
**characterized in that** the immobiliser (22) is a transmission lock which is automatically transferred into the currentless state when the motor vehicle is turned off.

6. Motor vehicle with a brake system obtaining its brake energy at least in part from brake energy storages (8) in a braking operation, and with a checking device (18) with which the state of charge of the brake energy storages (8) can be checked, **characterized in that** the motor vehicle, in addition, is provided with the following components:
- a device (22) allowing the motor vehicle to be automatically transferred into a driveable state,
- a control device (20) in which the state of charge of the brake energy storages (8) measured by the checking device (18) is comparable with a memorised information on a preset minimum state of charge and by which the motor vehicle can be transferred into a driveable state if the measured state of charge of at least one of the brake energy storages (8) exceeds or is equal to the preset minimum state of charge.

7. Motor vehicle according to claim 6,
**characterized in that** the device (22) allowing the motor vehicle to be automatically transferred into a non-driveable state, is an immobiliser (22) which is automatically transferred from a current-conductive state into a currentless state when the motor vehicle is turned off, thus blocking the motor vehicle.

8. Motor vehicle according to claim 7,
**characterized in that** the immobiliser (22) is an electric parking brake (40) or a transmission block.

## Revendications

1. Procédé de mise en service d'un véhicule automobile comportant un moteur d'entraînement, comprenant un système de freinage qui, lors d'une opération de freinage du véhicule automobile, reçoit son énergie d'actionnement de frein au moins en partie d'accumulateurs d'énergie de freinage (8) dont l'état de charge est contrôlé lors de la mise en service, **caractérisé en ce qu'**
- avant le contrôle de l'état de charge, le véhicule automobile passe automatiquement à un état inapte à la conduite,
- le contrôle de l'état de charge a lieu et
- le véhicule automobile passe à un état apte à la conduite lorsque le contrôle indique que l'état de charge d'au moins l'un des accumulateurs d'énergie de freinage (8) est supérieur ou égal à un état de charge minimal préfixé.

2. Procédé de mise en service d'un véhicule automobile suivant la revendication 1, **caractérisé en ce qu'**une charge complémentaire des accumulateurs d'énergie de freinage (8) a lieu lorsque, lors du contrôle, un état de charge trop faible est relevé et **en ce que** le véhicule automobile passe à l'état apte à la conduite lorsqu'un nouveau contrôle de l'état de charge indique que, grâce à une charge complémentaire, au moins l'un des accumulateurs d'énergie de freinage (8) a au moins atteint l'état de charge minimal préfixé.

3. Procédé de mise en service d'un véhicule automobile suivant l'une des revendications 1 à 2, **caractérisé en ce que** le passage du véhicule automobile à l'état inapte à la conduite est effectué au moyen d'un passage d'un blocage de conduite (22) à un état sans courant et le passage du véhicule automobile à l'état apte à la conduite est effectué au moyen d'un passage du blocage de conduite (22) à un état conduisant le courant.

4. Procédé de mise en service d'un véhicule automobile suivant la revendication 3, **caractérisé en ce qu'**en ce qui conceme le blocage de conduite (22), il s'agit d'un frein de stationnement (40) électrique qui, lors de l'immobilisation du véhicule automobile, passe automatiquement à l'état sans courant et maintient de ce fait le véhicule automobile à l'arrêt.

5. Procédé de mise en service d'un véhicule automobile suivant la revendication 3, **caractérisé en ce qu'**en ce qui conceme le blocage de conduite (22), il s'agit d'un blocage de boîte de vitesses qui, lors d'une immobilisation du véhicule automobile, passe automatiquement à l'état sans courant.

6. Véhicule automobile comprenant un système de freinage, qui, lors d'une opération de freinage, reçoit son énergie de freinage au moins en partie d'accumulateurs d'énergie de freinage (8), et un dispositif de contrôle (18) au moyen duquel l'état de charge des accumulateurs d'énergie de freinage (8) peut être contrôlé, **caractérisé en ce que** le véhicule automobile dispose en outre des éléments constitutifs suivants :
- un dispositif (22) au moyen duquel il est possible de faire passer automatiquement le véhicule automobile à un état inapte à la conduite,
- et un dispositif de commande (20) dans lequel un état de charge des accumulateurs d'énergie de freinage (8) mesuré par le dispositif de contrôle (18) peut être comparé à une information rangée en mémoire concemant un état de charge minimal préfixé et au moyen duquel un passage du véhicule automobile à un état apte à la conduite peut être provoqué lorsque l'état de charge mesuré d'au moins l'un des accumulateurs d'énergie de freinage (8) est supérieur ou égal à l'état de charge minimal préfixé.

7. Véhicule automobile suivant la revendication 6, **caractérisé en ce que** le dispositif (22) au moyen duquel il est possible de faire passer automatiquement le véhicule automobile à l'état inapte à la conduite est un blocage de conduite (22) qui, lors d'une immobilisation du véhicule automobile, passe automatiquement d'un état conduisant le courant à un état sans courant et maintient de ce fait le véhicule automobile à l'arrêt.

8. Véhicule automobile suivant la revendication 7, **caractérisé en ce qu'**en ce qui concerne le blocage de conduite (22), il s'agit d'un frein de stationnement (40) électrique ou d'un blocage de boîte de vitesses.
